(19) Europäisches Patentamt / European Patent Office / Office européen des brevets

(11) **EP 4 297 222 A1**

(12) **EUROPÄISCHE PATENTANMELDUNG**

(43) Veröffentlichungstag:
**27.12.2023 Patentblatt 2023/52**

(21) Anmeldenummer: **22180373.7**

(22) Anmeldetag: **22.06.2022**

(51) Internationale Patentklassifikation (IPC):
**H02J 3/00** (2006.01)   **H02J 3/24** (2006.01)
**H02J 13/00** (2006.01)

(52) Gemeinsame Patentklassifikation (CPC):
**H02J 3/001; H02J 3/242; H02J 13/00001;**
H02J 2203/20

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(71) Anmelder: **Siemens Aktiengesellschaft
80333 München (DE)**

(72) Erfinder:
• **EDER, Jana
1180 Wien (AT)**
• **SCHALL, Daniel
2020 Hollabrunn (AT)**
• **EINFALT, Alfred
1210 Wien (AT)**

(74) Vertreter: **Siemens Patent Attorneys
Postfach 22 16 34
80506 München (DE)**

(54) **COMPUTER-IMPLEMENTIERTES VERFAHREN UND SYSTEM ZUR ANOMALIE-ERKENNUNG UND ANOMALIE-LOKALISIERUNG IN EINEM ENERGIEVERTEILUNGS-NETZ**

(57)      Computer-implementiertes Verfahren zur Anomalie-Erkennung und Anomalie-Lokalisierung in einem Energieverteilungs-Netz, umfassend Sensor-Mittel zur Erfassung von Kenngrößen des Energieverteilungs-Netzes in Form von Frequenz-, Betrags- und Phasen-Informationen, welche am Energieverteilungs-Netz angeordnet sind, und folgende Schritte ausgeführt werden:
a) Konsistenz-Prüfung durch ein erstes Anwendungsprogramm für das Energieverteilungs-Netz:
a1) Bereitstellen der Topologie des Energieverteilungs-Netzes und Erfassen von ersten Sensor-Daten durch die Sensor-Mittel,
a2) Erzeugen, Trainieren und Bereitstellen eines ersten Modells auf Basis künstlicher Intelligenz in Form eines Auto-Encoders mithilfe der ersten Sensor-Daten und der Topologie,
a3) Bilden eines beschnittenen, zweiten Modells auf Basis künstlicher Intelligenz in Form eines Auto-Encoders durch Entfernen von zweiten Modell-Gewichten, welche außerhalb von vorbestimmten Schwellwerten liegen,

b) Erfassen von zweiten Sensor-Daten mithilfe der Sensor-Mittel durch ein zweites Anwendungsprogramm für das Energieverteilungs-Netz und Anwenden der zweiten Sensor-Daten auf das zweite Modell,
c) Anomalie-Erkennung und Anomalie-Lokalisierung mithilfe des zweiten Modells durch Bestimmung von Unterschieden zwischen den Eingangsdaten und den Ausgangsdaten des zweiten Modells.

FIG 7

EP 4 297 222 A1

**Beschreibung**

Die Erfindung betrifft ein computer-implementiertes Verfahren und ein System zur Anomalie-Erkennung und Anomalie-Lokalisierung in einem Energieverteilungs-Netz, umfassend Sensor-Mittel zur Erfassung von Kenngrößen des Energieverteilungs-Netzes in Form von Frequenz-, Betrags- und Phasen-Informationen, welche am Energieverteilungs-Netz angeordnet sind.

Die Erfindung betrifft ferner ein Computerprogramm, einen elektronisch lesbaren Datenträger und ein Datenträgersignal.

In Energieversorgungssystemen werden häufig sogenannte Phasen-Messvorrichtungen (engl. "phasor measurement units", kurz "PMUs") verwendet, um Synchrophasoren zu messen und damit eine dynamische Überwachung transienter Prozesse durchzuführen.

Solche Daten bilden die Grundlage für sogenannte Betriebszustands-Überwachungssysteme (engl "wide area monitoring systems") wie beispielsweise das Siemens SIGUARD PDP. Dieses Schnellüberwachungssystem zielt darauf ab, Ereignisse und Trends in Netzen mit schwankenden Lastflüssen oder hochbelasteten Leitungen zu erkennen, die herkömmliche Systeme nicht oder zu spät erkennen können.

Derzeit stützen sich diese Methoden auf Simulationen, Negativbeispiele und individuell definierte Schwellenwerte.

Es ist allerdings wünschenswert, einen vollautomatischen, unbeaufsichtigten Lernalgorithmus nutzen zu können, welcher nicht auf komplizierte, manuell definierte Schwellenwerte angewiesen ist.

Es ist daher Aufgabe der Erfindung ein solches Verfahren und ein entsprechendes System bereitzustellen.

Die erfindungsgemäße Aufgabe wird durch ein Verfahren eingangs genannter Art gelöst, wobei folgende Schritte ausgeführt werden:

a) Konsistenz-Prüfung durch ein erstes Anwendungsprogramm für das Energieverteilungs-Netz:

a1) Bereitstellen der Topologie des Energieverteilungs-Netzes und Erfassen von ersten Sensor-Daten durch die Sensor-Mittel,

a2) Erzeugen, Trainieren und Bereitstellen eines ersten Modells auf Basis künstlicher Intelligenz in Form eines Auto-Encoders mithilfe der ersten Sensor-Daten und der Topologie, aufweisend erste Modell-Gewichte, sowie Eingangsdaten und Ausgangsdaten,

a3) Bilden eines beschnittenen, zweiten Modells auf Basis künstlicher Intelligenz in Form eines Auto-Encoders, ausgehend vom ersten Modell, aufweisend zweite Modell-Gewichte, durch Entfernen von zweiten Modell-Gewichten, welche außerhalb von vorbestimmten Schwellwerten liegen,

b) Erfassen von zweiten Sensor-Daten mithilfe der Sensor-Mittel durch ein zweites Anwendungsprogramm für das Energieverteilungs-Netz und Anwenden der zweiten Sensor-Daten auf das zweite Modell,

c) Anomalie-Erkennung und Anomalie-Lokalisierung mithilfe des zweiten Modells durch Bestimmung von Unterschieden zwischen den Eingangsdaten und den Ausgangsdaten des zweiten Modells.

Die Erfindung beschreibt eine Anwendung, die Abweichungen vom normalen Szenario eines bestimmten PMUSs innerhalb eines WANs-Systems (engl. "wide area network") identifiziert.

Darüber hinaus hilft die Lösung zu überprüfen, ob die angenommene Topologie, d. h. die angenommene Zusammenschaltung des Netzwerks, korrekt ist.

Das erste Modell und das zweite Modell stimmen in den jeweiligen Eingangsdaten an Eingangsknoten und Ausgangsdaten an Ausgangsknoten überein. Das zweite Modell ist eine Teilmenge des ersten Modells.

Die Modelle können durch Graphen dargestellte werden, wobei Modell-Kanten Modell-Knoten verbinden.

Die Trainings-Daten repräsentieren einen gültigen Betriebsmodus des Energieverteilungs-Netzes.

In einer Weiterbildung der Erfindung ist es vorgesehen, dass beim Bilden des beschnittenen, zweiten Modells eine Normalisierung der Beträge der zweiten Modell-Gewichte erfolgt und die vorbestimmten Schwellwerte relativ zu den normalisierten zweiten Modell-Gewichten festgelegt sind.

Dadurch kann eine besonders einfache Beschneidung des Modells erfolgen.

In einer Weiterbildung der Erfindung ist es vorgesehen, dass nach dem Bilden des beschnittenen, zweiten Modells für das zweite Modell ein Kodierungs-Verlust zwischen Eingangsdaten und Ausgangsdaten mithilfe von Trainings-Daten für einen gültigen Betriebsmodus des Energieverteilungs-Netzes bestimmt wird und beim Erkennen einer Abweichung eine Warnung ausgegeben wird.

Dadurch wird erreicht, dass frühzeitig eine Inkompatibilität zwischen dem tatsächlichen Energieverteilungs-Netz und dessen Abbildung im Modell vorliegt.

In einer Weiterbildung der Erfindung ist es vorgesehen, dass beim Erkennen einer Anomalie eine Warnung ausgegeben wird, in welcher der Ort der Anomalie durch Ausgabe von Daten aus der Anomalie-Lokalisierung enthalten ist.

Dadurch wird eine genauere Analyse und Fehlerdiagnose der Ursache der ermittelten Anomalie erleichtert.

In einer Weiterbildung der Erfindung ist es vorgesehen, dass für das zweite Modell in Form eines Auto-Encoders ein Rekonstruktionsfehler zwischen dem Eingang und dem Ausgang des Autoencoders bestimmt wird.

Dadurch ist es auf eine besonders einfache Weise möglich, eine Veränderung im Energieverteilungs-Netz zu erkennen.

In einer Weiterbildung der Erfindung ist es vorgesehen, dass eine Abweichung der zweifachen bis vierfachen, bevorzugt der dreifachen Standardabweisung vom Mittelwert des Rekonstruktionsfehlers gegenüber einem fehlerfreien Betrieb des Energieverteilungs-Netzes als Anomalie im Energieverteilungs-Netz erkannt wird.

Dadurch wird ein besonders einfaches und gleichzeitig aussagekräftiges Kriterium zur Anomalie-Erkennung bereitgestellt.

In einer Weiterbildung der Erfindung ist es vorgesehen, dass der Rekonstruktionsfehler für die Anomalie-Erkennung und/oder der Anomalie-Lokalisierung verwendet wird.

In einer Weiterbildung der Erfindung ist es vorgesehen, dass ein gesamter Rekonstruktions-Fehler für das gesamte Modell und ein individueller Rekonstruktions-Fehler für jede Eingangsgröße des Auto-Encoders bestimmt werden, und anhand des individuellen Rekonstruktions-Fehlers festgestellt wird, wie hoch ein individueller Beitrag einer einzelnen Eingangsgröße am gesamten Rekonstruktions-Fehler ist.

Dadurch ist es möglich festzustellen, an welcher Stelle im Energieverteilungs-Netz eine Anomalie festgestellt wurde.

In einer Weiterbildung der Erfindung ist es vorgesehen, dass die Sensor-Daten jeweils Betriebs-Zustände oder Parameter des Energieverteilungs-Netzes abbilden, welche von einer Spannungs-, Strom- oder Leistungs-Messvorrichtung erfasst werden und Frequenz-, Betrags- und Phasen-Informationen umfassen.

Dadurch ist es auf einfache Weise möglich, geeignete Sensor-Daten für die Modell-Bildung zu erfassten, beispielsweise mithilfe von Smartmetern.

Die erfindungsgemäße Aufgabe wird durch ein System eingangs genannter Art gelöst, umfassend Sensor-Mittel zur Erfassung von Kenngrößen des Energieverteilungs-Netzes in Form von Frequenz-, Betrags- und Phasen-Informationen, welche am Energieverteilungs-Netz angeordnet sind, und das System dazu eingerichtet ist, das erfindungsgemäße Verfahren auszuführen.

In einer Weiterbildung der Erfindung ist es vorgesehen, dass das System ein Klienten-Server-System ist und das erste Anwendungsprogramm in der Cloud des Klienten-Server-System abläuft, und das zweite Anwendungsprogramm an Klienten des Klienten-Server-System abläuft, vorzugsweise an der Edge.

Dadurch ist es besonders einfach, die komplexe Berechnung des ersten Modells in der Cloud durchzuführen, wo beispielsweise temporär entsprechende Rechenkapazitäten bereitgestellt werden können, und die Betriebszustands-Überwachung bezüglich Anomalien an der Edge eines Klienten ausgeführt werden, wo eine Datensicherheit sowie eine Privatsphäre der Daten sichergestellt ist.

Die erfindungsgemäße Aufgabe wird durch ein Computerprogramm gelöst, umfassend Befehle, welche bei deren Ausführung durch einen Computer diesen veranlassen, das erfindungsgemäße Verfahren auszuführen.

Die erfindungsgemäße Aufgabe wird durch einen elektronisch lesbaren Datenträger mit darauf gespeicherten lesbaren Steuerinformationen gelöst, welche zumindest das erfindungsgemäße Computerprogramm umfassen und derart ausgestaltet sind, dass sie bei Verwendung des Datenträgers in einer Recheneinrichtung das erfindungsgemäße Verfahren durchführen.

Die erfindungsgemäße Aufgabe wird durch ein Datenträgersignal gelöst, welches das erfindungsgemäße Computerprogramm überträgt.

Die Erfindung wird nachfolgend anhand eines in den beigeschlossenen Zeichnungen dargestellten Ausführungsbeispiels näher erläutert. In den Zeichnungen zeigt:

Fig. 1    ein Fluss-Diagramm eines Ausführungsbeispiels für das erfindungsgemäße Verfahren,

Fig. 2    ein Blockdiagramm eines Ausführungsbeispiels für das erfindungsgemäße System,

Fig. 3-8    Details zum Verfahren nach Fig. 1,

Fig. 9    ein Beispiel für eine Topologie eines Energieverteilungs-Netzes mit Sensor-Daten,

Fig. 10    ein Ausführungsbeispiel für einen Programmcode für eine Anomalie-Lokalisierung,

Fig. 11    ein Ausführungsbeispiel für eine Betriebszustandsanzeige für ein Energieverteilungs-Netz,

Fig. 12    ein weiteres Ausführungsbeispiel für einen Programmcode für eine Anomalie-Lokalisierung,

Fig. 13    ein Beispiel für Eingangsdaten,

Fig. 14    erneut abgetastete Eingangsdaten zum Ergänzen von Daten,

Fig. 15    eine Anzahl an signifikanten Signalen mit einer Fenstergröße,

Fig. 16    ein Beispiel für einen Graphen eines Auto-Encoders,

Fig. 17    ein Beispiel für den zeitlichen Verlauf des gesamten Rekonstruktionsfehlers,

Fig. 18    Beispiel für einen absoluten individuellen Rekonstruktionsfehler,

Fig. 19    der individuelle Rekonstruktionsfehler nach Fig. 18 als Relativ-Darstellung.

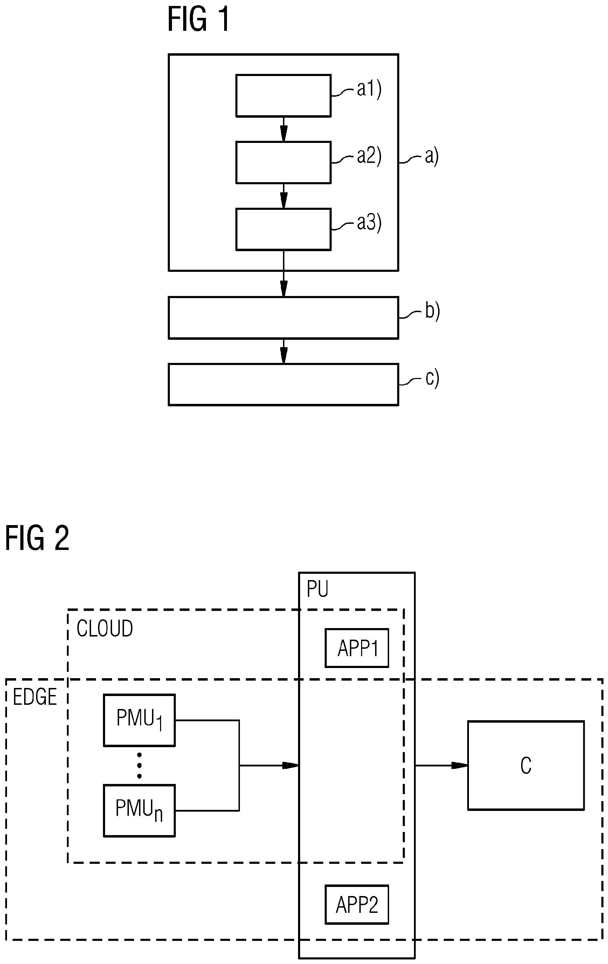

**Fig. 1** zeigt ein Fluss-Diagramm eines Ausführungsbeispiels für das erfindungsgemäße Verfahren, welches zumindest in Teilen computer-implementiert ist.
Folgende Schritte werden ausgeführt:

a) Konsistenz-Prüfung durch ein erstes Anwendungsprogramm für das Energieverteilungs-Netz:

a1) Bereitstellen der Topologie NT des Energieverteilungs-Netzes und Erfassen von ersten Sensor-Daten durch die Sensor-Mittel PMU1-PMUn,

a2) Erzeugen, Trainieren und Bereitstellen eines ersten Modells auf Basis künstlicher Intelligenz in Form eines Auto-Encoders mithilfe der ersten Sensor-Daten und der Topologie NT, aufweisend erste Modell-Gewichte,

a3) Bilden eines beschnittenen, zweiten Modells auf Basis künstlicher Intelligenz in Form eines Auto-Encoders, aufweisend zweite Modell-Gewichte, ausgehend vom ersten Modell, durch Entfernen von zweiten Modell-Gewichten, welche außerhalb von vorbestimmten Schwellwerten liegen, sowie optional vor der Schwellwert-Prüfung eine Normalisierung der zweiten Modell-Gewichte erfolgt,

b) Erfassen von zweiten Sensor-Daten mithilfe der Sensor-Mittel PMU1-PMUn durch ein zweites Anwendungsprogramm für das Energieverteilungs-Netz und Anwenden der zweiten Sensor-Daten auf das zweite Modell,

c) Anomalie-Erkennung ADET und Anomalie-Lokalisierung ALOC mithilfe des zweiten Modells durch Bestimmung von Unterschieden RE zwischen den Eingangsdaten und den Ausgangsdaten des zweiten Modells.

Der Schritt a) kann als Konsistenz-Prüfung verstanden werden, in welcher festgestellt wird, ob das durch Beschneidung verarbeitete Modell in Form eines neuronalen Netzes, in diesem Beispiel ein Auto-Encoder, einer im Schritt a1) vordefinierten, bereitgestellten Topologie innerhalb eines zulässigen Bereichs entspricht, oder ob beispielsweise ein bei der Beschneidung eine zu große Änderung des Modells erfolgt ist.
Es werden dabei Sensor-Daten, also Messwerte (wie Frequenz von Strom, Spannung, oder Leistung, oder eine Geschwindigkeit der Frequenzänderung) der Sensor-Mittel PMU1-PMUn über entsprechende Verbindungen mit benachbarten Sensormitteln einander verknüpft, es erfolgt also ein Bereitstellen von Eingangs-Daten (engl. "input layer mapping").
Wenn keine Verbindung zwischen zwei Sensor-Mitteln vorliegt, so kann es sich beispielsweise um entfernt gelegene Sensor-Mittel handeln, welche aufgrund der Topologie nicht miteinander verbunden sind und weitgehend entkoppelt sind.
Eine Anomalie kann beispielsweise ein Impedanz-Fehler auf einer Leitung sein, welcher durch eine unterbrochene Leitung oder eine durch ein Wetter-Ereignis beeinträchtigte Leitung hervorgerufen sein kann.
Das Training im Schritt a2) erfolgt mit den ersten Sensor-Daten, welche ein funktionierendes Energieverteilungs-Netz repräsentieren, also einen fehlerfreien Betriebszustand.

Der Schritt a3) wird ein beschnittenes, zweites Modell, ausgehend vom ersten Modell gebildet, indem die zweiten Modell-Gewichte ermittelt werden, welche einen signifikanten Beitrag zum Modell liefern. Das erste Modell bildet also die Basis des zweiten Modells. Das zweite Modell unterscheidet sich vom ersten insofern, als dass es eine Teilmenge des ersten Modells ist.

Dadurch kann das Modell für den Auto-Encoder erheblich vereinfacht werden und erlaubt eine weitere Verwendung an Rechenvorrichtungen mit eingeschränkten Rechen- und Speicher-Fähigkeiten, wie beispielsweise an einer Edge-Vorrichtung.

Die Beschneidung erfolgt durch Normalisierung der zweiten Modell-Gewichte und Entfernen jener Modell-Gewichte, welche außerhalb von vorbestimmten Schwellwerten liegen.

Nach der Normalisierung liegend die Modell-Gewichte zwischen Null und Eins.

Anschließend können jene Kanten des Modells entfernt werden, welche außerhalb von vorbestimmten Schwellwerten liegen, beispielsweise werden jene Kanten im Modell entfernt, die einen normalisierten Betrag von weniger als 30% aufweisen, beispielsweise auch 10% oder 20%.

Ferner können jene Kanten im Modell entfernt werden, welche keinen Eingang in Form von Sensor-Daten von einem Sensor-Mittel aufweisen, womit der Rechenaufwand bei der weiteren Verwendung des Modells reduziert werden kann.

Im Schritt b) wird nun ein aktueller Datensatz für die Sensor-Daten erfasst und durch den Auto-Encoder im Schritt c) entsprechend verarbeitet.

Bei Vorliegen einer großen Ähnlichkeit zwischen dem ersten und dem zweiten Modell scheint das Energieverteilungs-Netz gut zu funktionieren.

Falls jedoch eine große Abweichung zwischen den Eingangsdaten und den Ausgangsdaten des Auto-Encoders vorliegt, deutet dies auf eine Anomalie im Energieverteilungs-Netz hin. Dies lässt sich durch Rekonstruktionsfehler, beispielsweise mithilfe des mittleren quadratischen Fehlers a(engl. "mean squared error", kur "MSE") darstellen:

$$MSE = \frac{1}{n} \sum_{i=1}^{n} (s_i - s_i')^2$$

wobei die Indices i einzelne Größen des Eingangs- und Ausgangsvektors des Auto-Encoders zu einem Zeitpunkt kennzeichnen.

**Fig. 2** stellt ein Blockdiagramm eines Ausführungsbeispiels für das erfindungsgemäße System dar.

Das System umfasst Sensor-Mittel PMU1-PMUn zur Erfassung von Kenngrößen des Energieverteilungs-Netzes in Form von Frequenz-, Betrags- und Phasen-Informationen, welche am Energieverteilungs-Netz angeordnet sind.

Die Sensor-Daten bilden jeweils Parameter des Energieverteilungs-Netzes ab, welche von einer Spannungs-, Strom- oder Leistungs-Messvorrichtung als Sensor-Mittel erfasst werden und zumindest Phasen-Informationen, aber optional auch Frequenz-, Betrags-Informationen umfassen.

Das System dazu eingerichtet ist, das erfindungsgemäße Verfahren auszuführen.

Anwendungsprogramme APP1 und APP2 laufen auf einer Rechenvorrichtung PU (engl. "processing unit"), welche durch ein verteiltes Klienten-Server-System gebildet sein kann.

Das erste Anwendungsprogramm läuft in der Cloud CLOUD des Klienten-Server-System ab.

Das zweite Anwendungsprogramm läuft am Klienten, beispielsweise an einer Edge EDGE, des Klienten-Server-System ab. Eine erkannte Anomalie kann an einer Betriebszustandsanzeige C (engl. "cockpit") dargestellt werden.

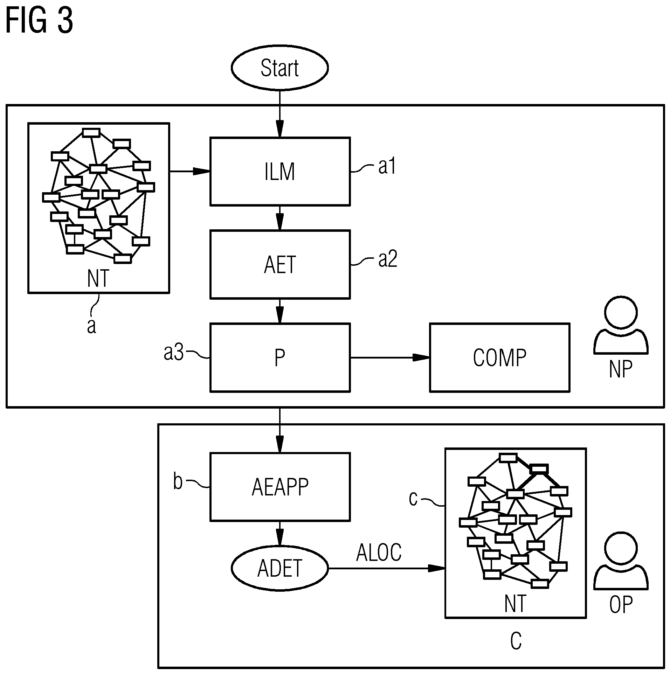

Die **Figuren 3 bis 8** zeigen Details zum Verfahren nach der Fig. 1.

**Fig. 3** stellt nochmal das erfindungsgemäße Verfahren dar.

Der Verfahrensschritt a1) umfasst ein Bereitstellen von Eingangs-Daten (engl. "input layer mapping", kurz ILM)

Der Verfahrensschritt a2) umfasst ein Auto-Encoder Training AET.

Der Verfahrensschritt a2) umfasst eine Beschneidung P (engl. "pruning").

Nach dem Bilden des beschnittenen, zweiten Modells im Verfahrensschritt a3) werden optional Eingangsdaten und Ausgangsdaten des Auto-Encoders für das zweite Modell im Schritt COMP verglichen.

Mit anderen Worten wird für das zweite Modell ein Kodierungs-Verlust zwischen Eingangsdaten und Ausgangsdaten mithilfe von Trainings-Daten für einen gültigen Betriebsmodus des Energieverteilungs-Netzes bestimmt.

Beim Erkennen einer Abweichung wird eine Warnung beispielsweise an einen Netzwerk-Planer NP oder Netzwerk-Bediener OP ausgegeben.

Beim Erkennen einer Anomalie ADET kann ebenfalls eine Warnung, beispielsweise über ein Netzbetriebsführungs-System SCADA (engl. "Supervisory Control and Data Acquisition beziehungsweise dessen Betriebszustandsanzeige C (engl. "cockpit") an einen Bediener OP (engl. "network operator") ausgegeben werden, in welcher der Ort der Anomalie durch Ausgabe von Daten aus der Anomalie-Lokalisierung (ALOC) enthalten ist.

Der Verfahrensschritt b) umfasst ein Auto-Encoder Anwendungsprogramm AEAPP, beispielsweise die Erkennung ADET und Lokalisierung ALOC von Anomalien in dem Energieverteilungs-Netz.

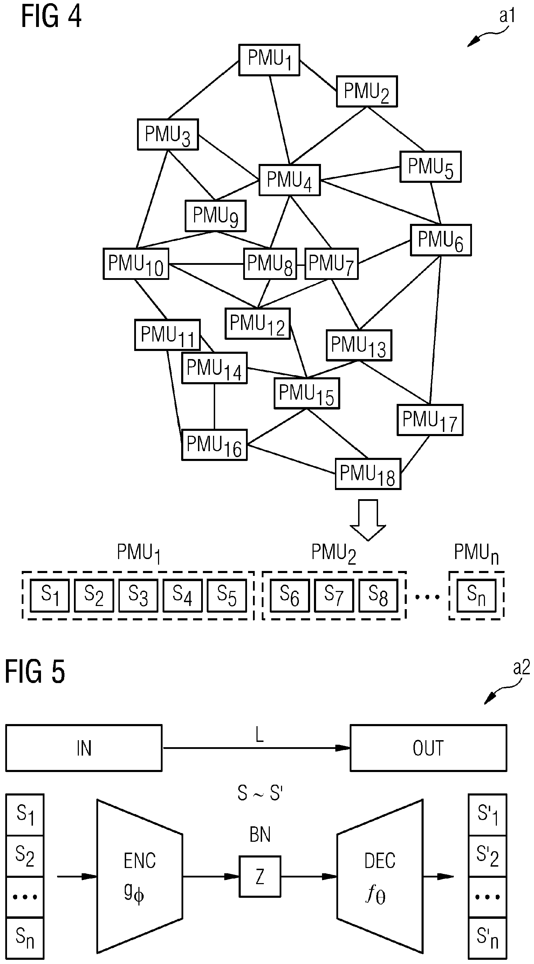

**Fig. 4** zeigt ein Beispiel für den Schritt a1) des Verfahrens für eine Topologie eines Energieverteilungs-Netzes, an welchem Sensor-Mittel PMU1-PMUn in Form von Phasen-Messvorrichtungen angeordnet sind.

Die gezeigte Topologie bildet einen initialen Eingangs-Vektor mit Sensor-Daten für eine fehlerfreien Betrieb des Energieverteilungs-Netzes.

Sensor-Daten $S_1$-$S_n$ können in Gruppen einzelnen Phasen-Messvorrichtungen $PMU_1$-$PMU_n$ zugeordnet werden.

Beim Trainieren des ersten Modells kann eine Verlust-Funktion L bestimmt werden.

**Fig. 5** stellt ein Beispiel für den Schritt a2) des Verfahrens zur Anomalie-Erkennung angewandten Auto-Encoder dar.

Es wird der Auto-Encoder mit den Sensor-Daten für eine fehlerfreien Betrieb des Energieverteilungs-Netzes trainiert.

Über den Eingang des Auto-Encoders werden Eingangs-Daten $S_1$-$S_n$ in Ausgangs-Daten $S'_1$-$S'_n$ konvertiert.

Für das zweite Modell kann ein Rekonstruktionsfehler RE zwischen dem Eingang und dem Ausgang des Autoencoders prognostiziert werden, beispielsweise durch den mittleren quadratischen Fehler, wie vorher ausgeführt, oder ein Kreuz-Entropie-Verlust.

Der bestimmte Rekonstruktionsfehler kann in weitere Folge für die Anomalie-Erkennung und/oder der Anomalie-Lokalisierung verwendet werden.

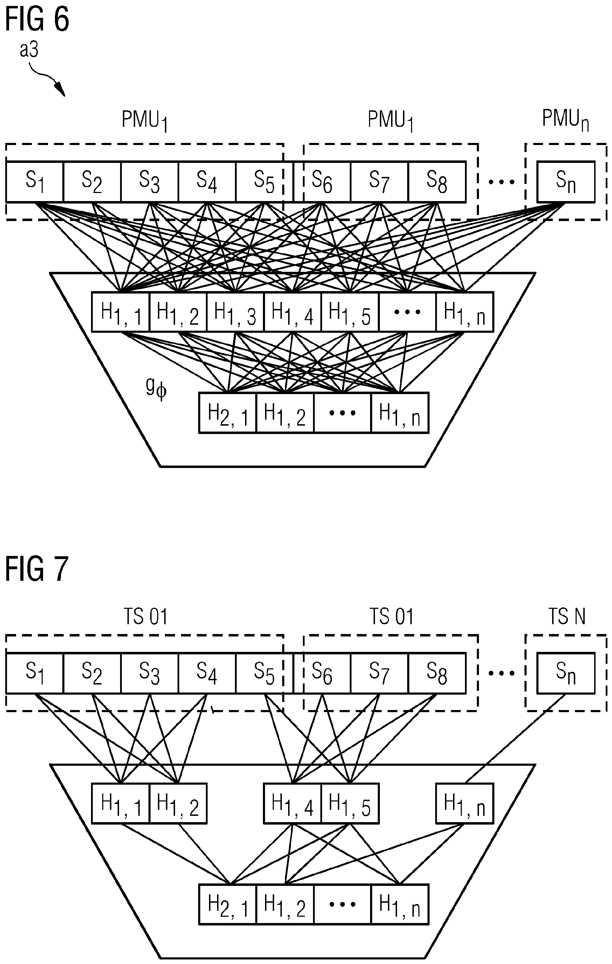

**Fig. 6** zeigt ein Beispiel für den Schritt a3) des Verfahrens, bei welchem das erste Modell, also das vollständige Modell des Energieverteilungs-Netzes abgebildet ist und durch den Auto-Encoder durch eine Merkmals-Funktion $g_\emptyset$ mit ersten Modell-Knoten $H_{1,1}$-$H_{m,n}$ des Decoders repräsentiert wird.

**Fig. 7** zeigt ein Beispiel für den Schritt a3) des Verfahrens, bei welchem das zweite Modell, also das beschnittene Modell des Energieverteilungs-Netzes abgebildet ist.

Es ist erkennbar, dass das zweite Modell in der Komplexität deutlich einfacher ist als das ursprüngliche erste Modell.

Es sind Testsignale TS 01 - TS markiert, welche aktuelle Daten im Energieverteilungs-Netz darstellen und jenen Daten von Sensor-Mittel PMU1-PMUn zugeordnet werden können, woraus ein aktueller Zustand des Energieverteilungs-Netzes erkennbar ist. Damit kann analysiert werden, ob ein Fehler beziehungsweise eine Anomalie des Energieverteilungs-Netzes am Ort des jeweiligen Sensor-Mittels PMU1-PMUn vorliegt.

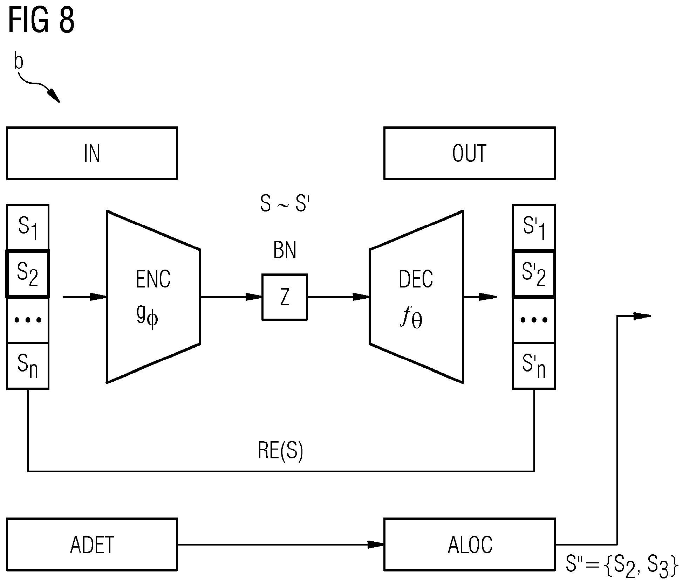

**Fig. 8** zeigt ein Beispiel für den Schritt b) des Verfahrens, bei welchem der Auto-Encoder zur Anomalie-Erkennung ADET und Anomalie-Lokalisierung ALOC angewandt wird.

Der Auto-Encoder ist durch Merkmals-Funktion $g_\emptyset$ des Decoders und Merkmals-Funktion $f_\emptyset$ des Encoders gebildet. Zwischen Decoder und Encoder liegt ein Flaschenhals BN (engl. "bottleneck"), der durch einen Vektor Z dargestellt ist. Der Vektor Z weist weniger Elemente auf als der Eingangs- und Ausgangs-Vektor des Auto-Encoders.

Es ist eine Decodierung und Encodierung nur bei einem fehlerfreien Betrieb des Energieverteilungs-Netzes möglich, wobei ein Eingangs-Datensatz $S_{Training}$ einen dementsprechenden Betriebszustand repräsentiert.

Es kann neben einem gesamten Rekonstruktions-Fehler $RE_{total}(S)$ für das gesamte Modell auch ein individueller Rekonstruktions-Fehler $RE_{ind}(S_i)$ für jede Eingangsgröße des Auto-Encoders bestimmt werden, um festzustellen, wie hoch ein individueller Beitrag einer einzelnen Eingangsgröße am gesamten Rekonstruktions-Fehler ist.

Ein individueller Rekonstruktions-Fehler $RE_{ind}(S_i)$ für eine einzelne Eingangsgröße kann durch eine sogenannte "root cause"-Analyse erfolgen, bei welcher folgender Zusammenhang genutzt wird:

$$RE_{ind}(S_i) = \frac{1}{w} \sum_{k=0}^{w-1} \left( \hat{x}_{t+k}^i - \hat{x}'^i_{t+k} \right)^2$$

Es kann also ein gesamter Rekonstruktions-Fehler für das gesamte Modell im Sinne einer Anomalie-Erkennung und zusätzlich ein individueller Rekonstruktions-Fehler für jede Eingangsgröße des Auto-Encoders im Sinne einer Anomalie-Lokalisierung bestimmt werden.

Ein Auto-Encoder-Verlust L für einen aktuellen Eingangs-Datensatz S kann durch Bestimmung des gesamten Rekonstruktionsfehlers $RE_{total}(S)$ ermittelt werden, beispielsweise durch den Zusammenhang:

$$RE_{total}(S) = \frac{1}{n} \sum_{i=1}^{n} (S_i - S'_i)^2$$

Für eine Anomalie-Detektion kann folgender vorteilhafter Zusammenhang für einen Schwellwert T (engl. "threshold") verwendet werden:

$$T = mean\left(RE\left(S_{Training}\right)\right) + 3 * std\left(RE\left(S_{Training}\right)\right)$$

Dadurch kann auf einfache Weise ein Kriterium für die Anomalie-Detektion durch einen Vergleich mit dem Schwellwert T für eine zulässige Fehlergröße bestimmt werden.

Das Kriterium bezieht sich auf den Faktor der Standardabweisung des dreifachen Rekonstruktionsfehlers, wobei der Faktor zwischen dem zweifachen und vierfachen Rekonstruktionsfehlers ebenfalls für gute Ergebnisse sorgt:

$$T = mean\left(RE\left(S_{Training}\right)\right) + (2 ... 4) * std\left(RE\left(S_{Training}\right)\right)$$

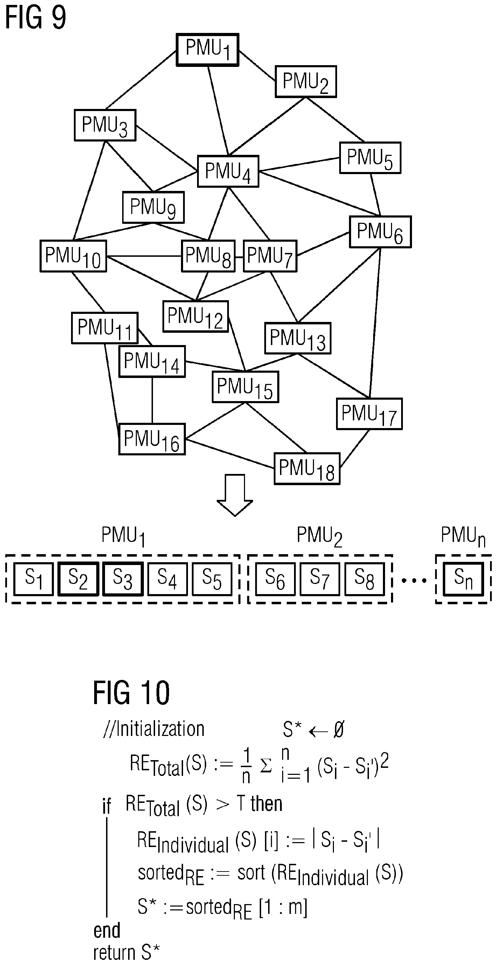

**Fig. 9** stellt ein Beispiel für eine Topologie eines Energieverteilungs-Netzes mit Sensor-Daten dar, wobei eine Anomalie an der Phasen-Messvorrichtung $PMU_1$ mit den Sensor-Daten $S_2$ und $S_3$ eingezeichnet ist.

**Fig. 10** zeigt ein erstes Ausführungsbeispiel für einen Programmcode für eine Anomalie-Lokalisierung dar.

Als Eingabe ist der Parameter T, eine Menge $S = \{S_1, S_1, ..., S_n\}$, eine Menge $S' = \{S'_1, S'_2, ..., S'_n\}$ und ein Parameter m vorgesehen, ausgegeben wird eine Menge von $S^*$.

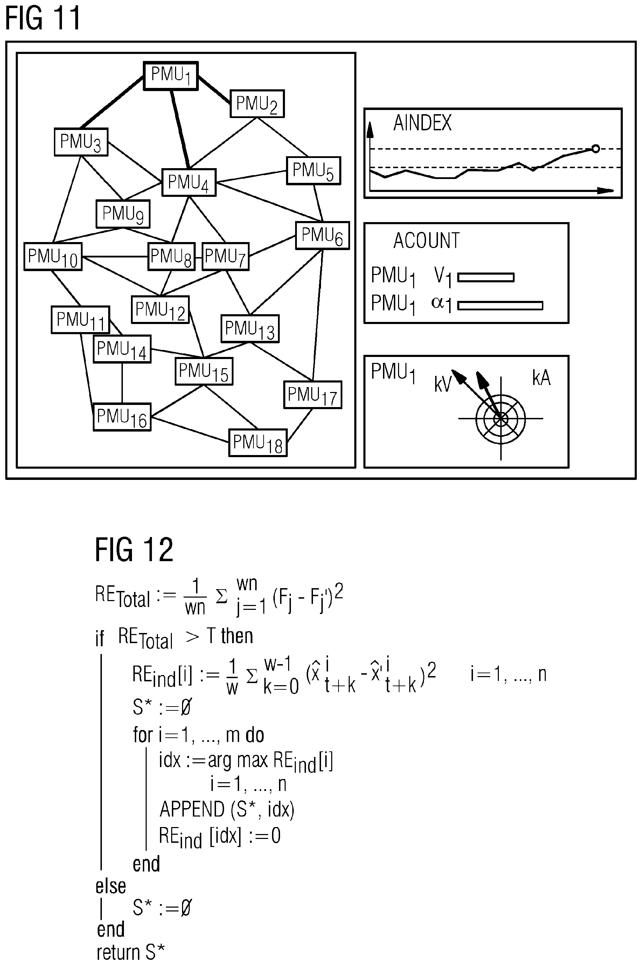

**Fig. 11** zeigt ein Ausführungsbeispiel für eine Betriebszustandsanzeige für ein Energieverteilungs-Netz, wobei die Anomalie nach der Fig. 9 dargestellt ist, als einfache Darstellungs-Variante.

Um komplexere Variationen von Sensor-Daten zu untersuchen, können auch andere Zusammenhänge angewandt werden, beispielsweise um ein entsprechendes Zeitfenster für die Sensor-Daten zu nutzen. Dies kann über einen Merkmals-Vektor beziehungsweise über eine Merkmals-Matrix $F_T$ erfolgen, welche mit den jeweiligen Sensor-Daten S multipliziert wird:

$$F_T = \begin{pmatrix} S_t^1 & S_t^2 & \cdots & S_t^n \\ S_{t+1}^1 & S_{t+1}^2 & \cdots & S_{t+1}^n \\ \vdots & \vdots & \ddots & \vdots \\ S_{t+w-1}^1 & S_{t+w-1}^2 & \cdots & S_{t+w-1}^n \end{pmatrix} \in \mathbb{R}^{w \times n}$$

Es können somit längere Beobachtungsdauern, wie etwa 10 Minuten, über die Verwendung einer Fenstergröße w (engl. "window size") und mehreren Zeitpunkten für Messungen durch die Sensor-Mittel berücksichtigt werden, ausgehend vom aktuellen Zeitpunkt t. Somit können Änderungen innerhalb des Zeitfensters erfasst und erkannt werden.

Ein Anomalie-Index AINDEX stellt den zeitlichen Verlauf von erkannten Anomalien im Energieverteilungs-Netz dar.

Ein Anomalie-Zähler ACOUNT stellt eine aktuell erkannte Anomalie im Energieverteilungs-Netz dar.

Ferner ist der aktuelle Messwert für Strom und Spannung mit Frequenz-, Betrags- und Phasen-Informationen für die Phasen-Messvorrichtung $PMU_1$ gezeigt, um dem Bediener OP exakte Informationen bezüglich der erkannten Anomalie zu bieten.

**Fig. 12** stellt ein zweites Ausführungsbeispiel für einen Programmcode für eine Anomalie-Lokalisierung dar.

Als Eingabe ist der Parameter T, ein Merkmal $F^T$ zum Zeitpunkt t, ein prognostiziertes Merkmal $F'^T$ zum Zeitpunkt t, eine Anzahl von signifikanten Signalen in Form eines Parameters m vorgesehen, ausgegeben wird eine Menge von signifikanten Signalen $S^* \subset \{S_t^1, S_t^2, ..., S_t^n\}$, wobei die Anzahl der signifikanten Signale $S^*$ gleich m ist.

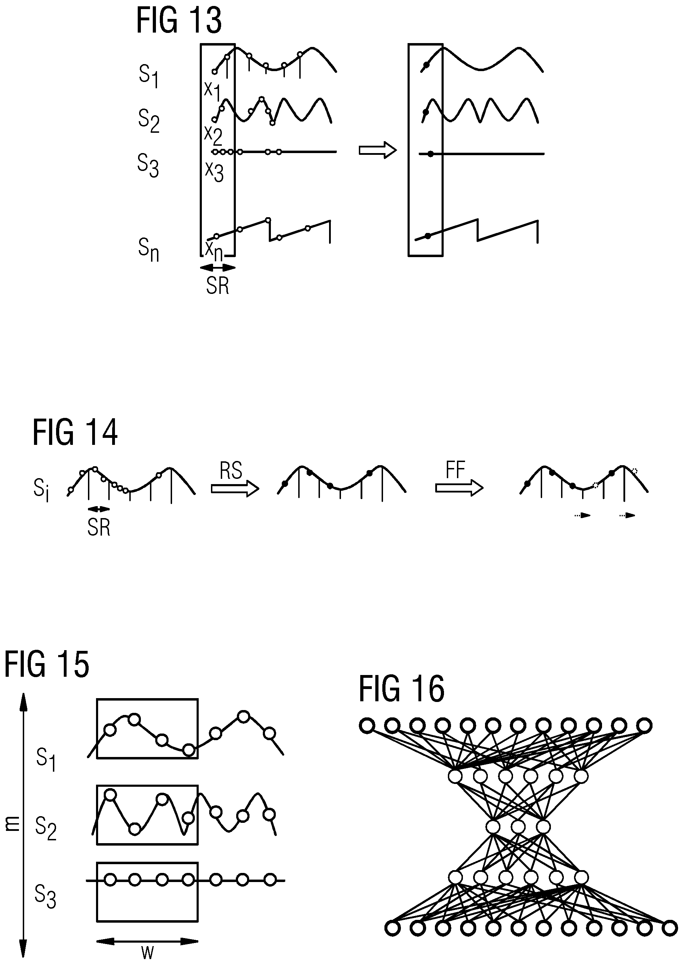

**Fig. 13** stellt ein Beispiel für Eingangsdaten $s_i$ dar, welche als abgetastete Eingangsdaten $x_i$ mit einer Abtastrate SR durch den Auto-Encoder weiterverarbeitet werden.

In der **Fig. 14** können optional die Eingangsdaten $s_i$ beziehungsweise die abgetasteten Eingangsdaten $x_i$ erneut in einem "Resampling"-Schritt RS abgetastet werden, um ein gleiches synchrones Zeitraster für die einzelnen Eingangsdaten untereinander zu erzeugen. Zusätzliche derart erzeugte neue Datenpunkte für die Eingangsdaten können in einem "Fill Forward"-Schritt in die Eingangsdaten eingesetzt werden.

Dadurch kann die nachfolgende digitale Signalverarbeitung vereinfacht werden, wenn die einzelnen Eingangsgrößen nicht mit derselben Abtastrate erfasst wurde, beziehungsweise nicht synchron erfasst wurden.

**Fig. 15** stellt eine Anzahl $m$ an signifikanten Signalen $S^*$ und eine Fenstergröße w dar.

Die Anzahl $m$ ist nicht mit weiter oben verwendeten Indizes von Modell-Knoten zu verwechseln.

**Fig. 16** zeigt ein Beispiel für einen Graphen eines Auto-Encoders.

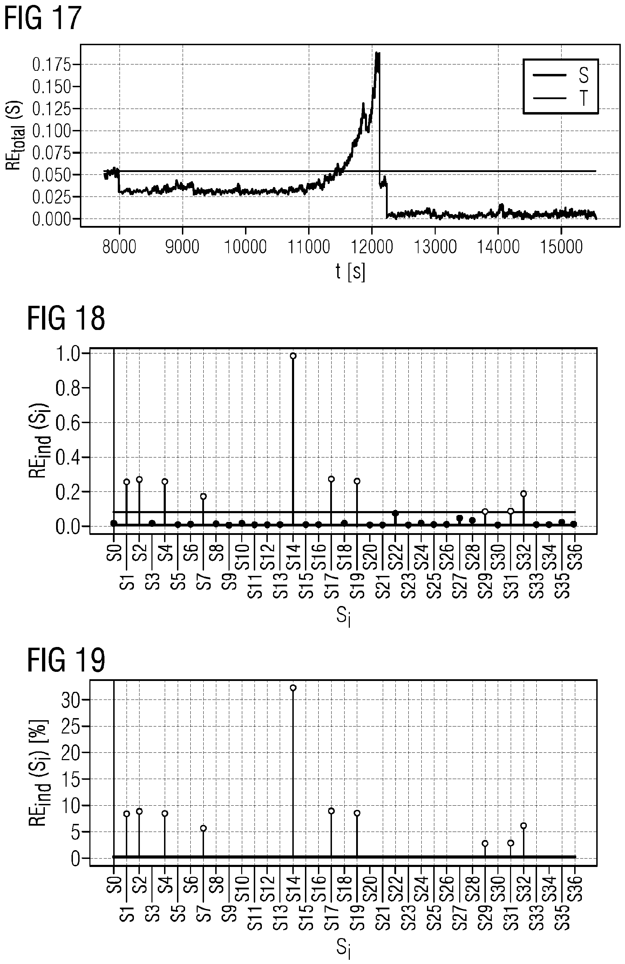

**Fig. 17** stellt ein Beispiel für den zeitlichen Verlauf des gesamten Rekonstruktionsfehlers $RE_{total}(S)$ dar.

**Fig. 18** und **Fig. 19** stellen ein Beispiel für einen individuellen Rekonstruktionsfehler $RE_{ind}(S_i)$ mit seinen individuellen Anteilen in Absolut- und Relativ-Beträgen dar, wobei ein Schwellwert $T$ eingezeichnet ist.

**Bezugszeichenliste:**

| | |
|---|---|
| ACOUNT | Anomalie-Zähler |
| ADET | Anomalie-Erkennung |
| AEAPP | Auto-Encoder Anwendungsprogramm |
| AET | Auto-Encoder Training |
| AINDEX | Anomalie-Index |
| ALOC | Anomalie-Lokalisierung |
| BN | Flaschenhals (engl. "bottleneck") |
| C | Betriebszustandsanzeige (engl. "cockpit") eines Netzbetriebsführungs-Systems |
| CLOUD | Cloud eines Klienten-Server-Systems |
| COMP | Vergleich des beschnittenen neuronalen Netzes mit der Netzwerk-Topologie |
| DEC | Decoder |
| EDGE | Edge eines Klienten-Server-Systems |
| ENC | Encoder |
| FF | Auffüllen (engl. "fill forward") |
| $g_\emptyset$, $h_\emptyset$ | Merkmals-Funktion |
| $H_{1,1}$-$H_{m,n}$ | Modell-Knoten |
| ILM | Bereitstellen von Eingangs-Daten (engl. "input layer mapping") |
| IN | Eingang mit Sensor-Signalen |
| L | Verlust des Auto-Encoders |
| m | Anzahl signifikanter Signale |
| NP | Netzwerk-Planer |
| NT | Netzwerk-Topologie |
| OP | Bediener |
| OUT | Ausgang mit rekonstruierten Sensor-Signalen |
| P | Beschneidung (engl. "pruning") |
| $PMU_1$-$PMU_n$ | Phasen-Messvorrichtung |
| PU | Rechen-Vorrichtung (engl. "processing unit") |
| RE | Rekonstruktionsfehler (gesamt oder individuell) |
| RS | erneutes Abtasten (engl. "resampling") |
| SR | Abtastrate (engl. "sampling rate") |
| $S'_1$-$S'_n$ | Parameter des beschnittenen neuronalen Netzwerks, Ausgangs-Daten des Auto-encoders |
| $S_1$-$S_n$ | Sensor-Signale, Eingangs-Daten des Autoencoders |
| t | Zeit |
| T | Schwellwert (engl "threshold") |
| TS 01-TS N | aktuelle Daten |
| $x_i$ | abgetastete Eingangsdaten |
| Z | Vektor |

**Patentansprüche**

1. Computer-implementiertes Verfahren zur Anomalie-Erkennung und Anomalie-Lokalisierung in einem Energieverteilungs-Netz, umfassend Sensor-Mittel (PMU1-PMUn) zur Erfassung von Kenngrößen des Energieverteilungs-Netzes in Form von Frequenz-, Betrags- und Phasen-Informationen, welche am Energieverteilungs-Netz angeordnet sind, und folgende Schritte ausgeführt werden:

   a) Konsistenz-Prüfung durch ein erstes Anwendungsprogramm für das Energieverteilungs-Netz:

a1) Bereitstellen der Topologie (NT) des Energieverteilungs-Netzes und Erfassen von ersten Sensor-Daten durch die Sensor-Mittel (PMU1-PMUn),

a2) Erzeugen, Trainieren und Bereitstellen eines ersten Modells auf Basis künstlicher Intelligenz in Form eines Auto-Encoders mithilfe der ersten Sensor-Daten und der Topologie (NT), aufweisend erste Modell-Gewichte,

a3) Bilden eines beschnittenen, zweiten Modells auf Basis künstlicher Intelligenz in Form eines Auto-Encoders, ausgehend vom ersten Modell, aufweisend zweite Modell-Gewichte, durch Entfernen von zweiten Modell-Gewichten, welche außerhalb von vorbestimmten Schwellwerten liegen,

b) Erfassen von zweiten Sensor-Daten mithilfe der Sensor-Mittel (PMU1-PMUn) durch ein zweites Anwendungsprogramm für das Energieverteilungs-Netz und Anwenden der zweiten Sensor-Daten auf das zweite Modell,

c) Anomalie-Erkennung (ADET) und Anomalie-Lokalisierung (ALOC) mithilfe des zweiten Modells durch Bestimmung von Unterschieden (RE) zwischen den Eingangsdaten und den Ausgangsdaten des zweiten Modells.

2. Verfahren nach dem vorhergehenden Anspruch, wobei beim Bilden des beschnittenen, zweiten Modells eine Normalisierung der Beträge der zweiten Modell-Gewichte erfolgt und die vorbestimmten Schwellwerte relativ zu den normalisierten zweiten Modell-Gewichten festgelegt sind.

3. Verfahren nach einem der vorhergehenden Ansprüche, wobei nach dem Bilden des beschnittenen, zweiten Modells für das zweite Modell ein Kodierungs-Verlust zwischen Eingangsdaten und Ausgangsdaten mithilfe von Trainings-Daten für einen gültigen Betriebsmodus des Energieverteilungs-Netzes bestimmt wird und beim Erkennen einer Abweichung eine Warnung ausgegeben wird.

4. Verfahren nach einem der vorhergehenden Ansprüche, wobei beim Erkennen einer Anomalie (ADET) eine Warnung ausgegeben wird, in welcher der Ort der Anomalie durch Ausgabe von Daten (C) aus der Anomalie-Lokalisierung (ALOC) enthalten ist.

5. Verfahren nach einem der vorhergehenden Ansprüche, wobei für das zweite Modell in Form eines Auto-Encoders ein Rekonstruktionsfehler (RE) zwischen dem Eingang und dem Ausgang des Autoencoders bestimmt wird.

6. Verfahren nach dem vorhergehenden Anspruch, wobei eine Abweichung der zweifachen bis vierfachen, bevorzugt der dreifachen Standardabweisung vom Mittelwert des Rekonstruktionsfehlers (RE) gegenüber einem fehlerfreien Betrieb des Energieverteilungs-Netzes als Anomalie im Energieverteilungs-Netz erkannt wird.

7. Verfahren nach dem vorhergehenden Anspruch, wobei der Rekonstruktionsfehler für die Anomalie-Erkennung und/oder der Anomalie-Lokalisierung verwendet wird.

8. Verfahren nach einem der Ansprüche 5 bis 7, wobei ein gesamter Rekonstruktions-Fehler für das gesamte Modell und ein individueller Rekonstruktions-Fehler für jede Eingangsgröße des Auto-Encoders bestimmt werden, und anhand des individuellen Rekonstruktions-Fehlers festgestellt wird, wie hoch ein individueller Beitrag einer einzelnen Eingangsgröße am gesamten Rekonstruktions-Fehler ist.

9. Verfahren nach einem der vorhergehenden Ansprüche, wobei die Sensor-Daten jeweils Parameter des Energieverteilungs-Netzes abbilden, welche von einer Spannungs-, Strom- oder Leistungs-Messvorrichtung erfasst werden und Frequenz-, Betrags- und Phasen-Informationen umfassen.

10. System zur Anomalie-Erkennung in einem Energieverteilungs-Netz, umfassend Sensor-Mittel zur Erfassung von Kenngrößen des Energieverteilungs-Netzes in Form von Frequenz-, Betrags- und Phasen-Informationen, welche am Energieverteilungs-Netz angeordnet sind, und das System dazu eingerichtet ist, das Verfahren nach einem der vorhergehenden Ansprüche auszuführen.

11. System nach dem vorhergehenden Anspruch, wobei das System ein Klienten-Server-System ist und das erste Anwendungsprogramm in der Cloud (CLOUD) des Klienten-Server-System abläuft, und das zweite Anwendungsprogramm an Klienten (EDGE) des Klienten-Server-System abläuft.

12. Computerprogramm, umfassend Befehle, welche bei deren Ausführung durch einen Computer diesen veranlassen, das Verfahren nach einem der Ansprüche 1 bis 9 auszuführen.

13. Elektronisch lesbarer Datenträger mit darauf gespeicherten lesbaren Steuerinformationen, welche zumindest das Computerprogramm nach dem vorhergehenden Anspruch umfassen und derart ausgestaltet sind, dass sie bei Verwendung des Datenträgers in einer Recheneinrichtung das Verfahren nach einem der Ansprüche 1 bis 9 durchführen.

14. Datenträgersignal, welches das Computerprogramm nach Anspruch 12 überträgt.

# FIG 1

# FIG 2

FIG 3

FIG 4

a1

PMU$_1$

PMU$_2$

PMU$_3$

PMU$_4$

PMU$_5$

PMU$_9$

PMU$_6$

PMU$_{10}$

PMU$_8$

PMU$_7$

PMU$_{12}$

PMU$_{13}$

PMU$_{11}$

PMU$_{14}$

PMU$_{15}$

PMU$_{17}$

PMU$_{16}$

PMU$_{18}$

PMU$_1$

PMU$_2$

PMU$_n$

S$_1$ | S$_2$ | S$_3$ | S$_4$ | S$_5$

S$_6$ | S$_7$ | S$_8$

S$_n$

FIG 5

a2

IN

L

OUT

S ~ S'

S$_1$

S$_2$

$\cdots$

S$_n$

ENC
$g_\phi$

BN

Z

DEC
$f_\theta$

S'$_1$

S'$_2$

$\cdots$

S'$_n$

# FIG 6

a3

# FIG 7

# FIG 8

## FIG 9

## FIG 10

//Initialization $\qquad$ $S^* \leftarrow \emptyset$

$$RE_{Total}(S) := \frac{1}{n} \sum_{i=1}^{n} (S_i - S_i')^2$$

if $RE_{Total}(S) > T$ then

$\quad RE_{Individual}(S)[i] := |S_i - S_i'|$

$\quad sorted_{RE} := sort(RE_{Individual}(S))$

$\quad S^* := sorted_{RE}[1:m]$

end

return $S^*$

# FIG 11

# FIG 12

$$RE_{Total} := \frac{1}{wn} \Sigma_{j=1}^{wn} (F_j - F_j')^2$$

if $RE_{Total} > T$ then

$$RE_{ind}[i] := \frac{1}{w} \Sigma_{k=0}^{w-1} (\hat{x}_{t+k}^i - \hat{x'}_{t+k}^i)^2 \qquad i = 1, ..., n$$

$S^* := \emptyset$

for $i = 1, ..., m$ do

$idx := \arg\max_{i=1,...,n} RE_{ind}[i]$

APPEND $(S^*, idx)$

$RE_{ind}[idx] := 0$

end

else

$S^* := \emptyset$

end

return $S^*$

FIG 13

FIG 14

FIG 15

FIG 16

## FIG 17

## FIG 18

## FIG 19

Europäisches
Patentamt

European
Patent Office

Office européen
des brevets

# EUROPÄISCHER RECHERCHENBERICHT

**Nummer der Anmeldung**

EP 22 18 0373

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | CN 107 480 849 B (UNIV BEIJING POSTS & TELECOMM; CHINA ELECTRIC POWER RES INST ET AL.) 2. April 2021 (2021-04-02) | 1-14 | INV. H02J3/00 H02J3/24 H02J13/00 |
| Y | * Absätze [0002] - [0245] * | 11 | |
| A | WO 2020/019318 A1 (SIEMENS LTD CHINA [CN]) 30. Januar 2020 (2020-01-30) * Absätze [0004] - [0034]; Abbildungen 1-17 * | 1-14 | |
| A | JUAN M RAMIREZ ET AL: "A multi-objective formulation to estimate dynamic equivalents", NORTH AMERICAN POWER SYMPOSIUM (NAPS), 2011, IEEE, 4. August 2011 (2011-08-04), Seiten 1-7, XP031940579, DOI: 10.1109/NAPS.2011.6024856 ISBN: 978-1-4577-0417-8 * Seiten 1,2 * | 1-14 | |
| Y | US 2020/167258 A1 (CHATTOPADHYAY RITA [US] ET AL) 28. Mai 2020 (2020-05-28) * Absätze [0024], [0047], [0068], [0076]; Abbildungen 1-11 * | 11 | RECHERCHIERTE SACHGEBIETE (IPC) H02J |

Der vorliegende Recherchenbericht wurde für alle Patentansprüche erstellt

| Recherchenort | Abschlußdatum der Recherche | Prüfer |
|---|---|---|
| München | 28. November 2022 | Krasser, Bernhard |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 22 18 0373

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

28-11-2022

| Im Recherchenbericht angeführtes Patentdokument | Datum der Veröffentlichung | Mitglied(er) der Patentfamilie | Datum der Veröffentlichung |
|---|---|---|---|
| CN 107480849 B | 02-04-2021 | KEINE | |
| WO 2020019318 A1 | 30-01-2020 | KEINE | |
| US 2020167258 A1 | 28-05-2020 | DE 102020132078 A1 | 29-07-2021 |
| | | US 2020167258 A1 | 28-05-2020 |

EPO FORM P0461

Für nähere Einzelheiten zu diesem Anhang : siehe Amtsblatt des Europäischen Patentamts, Nr.12/82